# EUROPÄISCHE PATENTSCHRIFT

(11) **EP 1 698 535 B1**
(45) Veröffentlichungstag und Bekanntmachung des Hinweises auf die Patenterteilung: **24.02.2016**
(21) Anmeldenummer: 06009489.3
(22) Anmeldetag: 09.05.2006
(51) Int. Cl.: B60T 13/66, B60T 8/32, B60T 17/22, B60T 8/17

(54) **Fahrzeuganhängeranordnung mit einer Bremssteuereinrichtung und weitere Steuereinrichtung für eine solche Fahrzeuganhängeranordnung**
Device for a trailer comprising a brake control system and a further control system therefor
Dispositif pour remorque comprennant une système de réglage de freinage avec en outre une autre systeme de réglage

(30) Priorität: 03.06.2005 DE 102005025622
(43) Veröffentlichungstag der Anmeldung: 06.09.2006
(73) Patentinhaber: Schmitz Cargobull Gotha GmbH, 99867 Gotha (DE)
(72) Erfinder: Koch, Josef, 89081 Ulm (DE)
(74) Vertreter: Baur & Weber Patentanwälte

(56) Entgegenhaltungen:
- EP-A- 0 467 112
- EP-A- 1 504 975
- DE-A1- 4 227 083
- DE-A1- 10 137 148
- DE-A1- 10 216 564
- DE-A1- 10 310 235
- GB-A- 2 363 435
- US-A- 5 690 347
- US-A1- 2003 168 908
- US-A1- 2003 222 774
- US-B1- 6 411 206

## Beschreibung

Die Erfindung betrifft einen Fahrzeuganhänger mit einer Bremssteuereinrichtung laut Oberbegriff des Anspruchs 1.

Fahrzeuganhänger für größere Lasten wie beispielsweise Sattelauflieger weisen ein eigenes, vom Zugfahrzeug aus betätigbares Bremssystem aus. Gebräuchlich ist insbesondere eine pneumatische Betätigung der Bremsen, wofür die Druckluft typischerweise im Zugfahrzeug erzeugt und über Druckluftkupplungen in ein Druckluftsystem des Anhängers eingespeist wird.

Moderne Bremssysteme in solchen Fahrzeuganhängeranordnungen enthalten eine anhängerseitige Bremssteuereinrichtung, beispielsweise eine unter der Bezeichnung Trailer EBS von den Firmen Knorr Bremse Haldex oder Wabco hergestellte Bremssteuereinrichtung, welche mit einer anhängerseitigen Sensoranordnung verbunden ist und von dieser Sensorsignale betreffend beispielsweise die aktuelle Drehgeschwindigkeit einzelner Räder aufnimmt und daraus Steuersignale für das Bremssystem, insbesondere in kritischen Fahrsituationen ableitet. Die Sensoranordnung kann ferner beispielsweise Sensoren zur Erfassung der Neigung des Fahrzeugs oder des Beladungszustands enthalten. In die Bremssteuereinrichtung können Zusatzfunktionen, wie beispielsweise eine beladungsabhängige und/oder geschwindigkeitsabhängige Steuerung einer Achsliftvorrichtung bei einem mehrachsigem Sattelauflieger integriert sein. Über Eingabeeinrichtungen können von der automatischen Achsliftsteuerung abweichende Kommandos an die Bremssteuereinrichtung gegeben werden, wobei ein Anheben der Liftachse nur unter eingeschränkten Bedingungen von Beladung und Geschwindigkeit möglich ist. Die Bremssteuereinrichtung enthält eine elektronische Einheit, welche zur Abgabe von elektrischen Signalen an mehreren Ausgängen programmierbar und über elektrische Eingänge ansteuerbar sein kann, wodurch in begrenztem Umfang eine Anpassung von Funktionen an spezifische Benutzeranforderungen möglich ist. Eine Veränderung der voreingestellten sicherheitsrelevanten Bremssteuerfunktionen ist über die elektrischen Eingänge oder die Programmierung nicht möglich. Die Bremssteuereinrichtung ist über eine eigenständige elektrische Versorgungsleitung und eine Datenbusleitung mit dem Zugfahrzeug verbunden. Die Bremssteuereinrichtung ist über einen anhängerseitigen Vorratsbehälter vom Zugfahrzeug mit Druckluft versorgt und steuert über Druckluftausgänge die Anhängerbremsen. Die Firma Wabco bietet zusätzlich eine Trailer-Control-Electronic als Ergänzungsgerät an.

Die DE 10137148 offenbart eine Bremsanlage für Nutzfahrzeuganhänger, bei welcher eine anhängerseitige elektronische Bremssteuereinrichtung in Form eines EBS-Moduls vorhanden ist, welches in Abhängigkeit eines Differenzschlupfes zwischen der Vorderachse und der Hinterachse ein für die Bremsen der Vorderachse gemeinsames ABS-Ventil ansteuert. Dabei wird berücksichtigt, dass bei einem Anhänger mit lenkbarer Vorderachse bei einer Kurvenfahrt die Geschwindigkeit der Vorderräder per se größer ist als die der Hinterräder. Ohne exakte Messung des Bremsdrucks an der Vorderachse wird ein solcher lediglich berechnet oder geschätzt und die Steuerung des ABS-Ventils erfolgt unter Kompensation der kurvenbedingten Geschwindigkeitsdifferenz und gegebenenfalls verschiedener Raddurchmesser. Sensoren für den Hinterradbremsdruck und Radsensoren liefern Sensorsignale an die Bremssteuereinrichtung.

Aus der EP 1504975 A1 ist eine druckmittelbetriebene Bremsanlage für ein Zugfahrzeug, welches Anschlüsse für eine Anhängerbremseinrichtung aufweist, bekannt. Die Anschlüsse zu der Anhängerbremseinrichtung umfassen in gebräuchlicher Weise eine mehrpolige elektrische Steckverbindung sowie zwei pneumatische Anschlüsse. Neben der gebräuchlichen Bremssteuereinrichtung ist zusätzlich ein Feststellbremsmodul vorgesehen, in welches eine elektronische Steuereinrichtung sowie eine von dieser elektrisch betätigbare Ventileinrichtung integriert sind. Die anhängerseitige Bremseinrichtung ist nicht beschrieben und von dem zugfahrzeugseitigen Feststellbremsmodul nicht in ihrem Aufbau betroffen.

Aus der US 2003/0168908 A1 ist ein Bremssystem zur Steuerung der Bremsanlage eines Anhängers bekannt, bei welchem eine manuell betätigbare Steuereinrichtung im Bereich des Fahrers angeordnet werden kann. Die Steuereinrichtung ist über elektrische Leitungen mit einem anhängerseitigen Leistungsmodul verbunden. Bei Betätigen der eigenen Bremse des ziehenden Fahrzeugs und dem Aufleuchten dessen Bremslichter bewirkt ein der Steuereinrichtung zugeführtes Bremslichtsignal, dass die Steuereinrichtung ihrerseits Steuersignale zu dem anhängerseitigen Leistungsmodul leitet, welches Aktuatoren zur Betätigung der Anhängerbremsen mit elektrischer Leistung beaufschlagt. Die Steuereinrichtung im Zugfahrzeug enthält zusätzlich Anzeigeeinrichtungen zur Signalisierung der Funktionsfähigkeit der Anhängerbremsen und eine Taste zur manuellen Auslösung eines Bremssignals.

Der US 5690347 A liegt das Problem zugrunde, dass bei einer Sattelaufliegerkombination der Winkel zwischen den Längsrichtungen von Zugfahrzeug und Sattelanhänger im Fahrbetrieb durch dynamische Effekte gefährliche Werte annehmen kann. Um dies zu unterdrücken, sind im Bereich der Sattelkupplungsplatte vertikal an die Unterseite des Sattelaufliegers anlegbare Reibungsbremseinrichtungen vorgesehen, welche die Winkelveränderungen zwischen den genannten Längsrichtungen dämpfen.

Ein aus der DE 4227083 A1 bekanntes elektronisches Bremssystem eines Zugfahrzeugs sieht eine Aufteilung der gesamten komplexen Elektronik eines Bremssystems auf nur zwei Einheiten vor, welche miteinander kommunizieren und jeweils mindestens zwei Drücke unabhängig voneinander regeln können. Ein durch den Fahrer an einem Bremswertgeber vorgegebener Bremswert wird bei Anhängerbetrieb mechanisch als Steuerdruck oder elektrisch als elektrisches Bremswertsignal über die gebräuchlichen pneumatischen und elektrischen Schnittstellen an die Bremsanlage eines Anhängers übertragen.

Aus der US 2003/0222774 A1 ist ein System zur Überwachung von pneumatischen Bremsaktuatoren bekannt, bei welchem ein Bremslichtsignal und Sensorsignale von Bewegungssensoren an den einzelnen Aktuatoren kombiniert mit einer Zeitverzögerung ausgewertet werden, um Aussagen über eine korrekte Funktion der einzelnen Aktuatoren abzuleiten. Die Statusinformationen der Aktuatoren können dem Fahrer zusammen mit weiteren Informationen auf einem Display im Fahrerhaus angezeigt werden. Ein Überwachungssystem für Bremsaktuatoren ist auch aus der US 6411206 B1 bekannt.

Der Erfindung liegt die Aufgabe zugrunde, den Gebrauch einer Fahrzeuganhängeranordnung mit einer Bremssteuereinrichtung für den Benutzer weiter zu verbessern und eine vorteilhafte weitere Steuereinrichtung hierfür anzugeben.

Die Erfindung ist im Patentanspruch 1 beschrieben. Die abhängigen Ansprüche enthalten vorteilhafte Ausgestaltungen und Weiterbildungen der Erfindung.

Die Verbindung der weiteren Steuereinrichtung über wenigstens einen Signalpfad mit der Bremssteuereinrichtung ermöglicht vorteilhafterweise die Verknüpfung einer über die Eingabeeinrichtungen der weiteren Steuereinrichtung eingebbaren Anweisung mit in der Bremssteuereinrichtung für die Bremssteuerung vorhandenen Informationen, beispielsweise aus den Sensorsignalen der Sensoranordnung abgeleiteten Informationen oder Informationen über pneumatischer Bremsausgangsanschlüsse der Bremssteuereinrichtung. Hierdurch können insbesondere vom Benutzer steuerbare Aktionen des Anhängers automatisch mit vorgebbaren Sicherheitskriterien verknüpft werden, wodurch solche Aktionen zum einen sicherer und zum anderen für den Benutzer in der Handhabung einfacher werden. Solche vom Benutzer steuerbare Aktionen können beispielsweise bei einem Kipper-Anhänger das Einlegen einer sogenannten Fertigerbremse das Absenken des Chassis sein.

Insbesondere kann über die weitere Steuereinrichtung vorteilhafterweise wenigstens eine über die Bremssteuereinrichtung in Alleinstellung nicht betätigbare Aktuatoreinrichtung ansteuerbar sein. Die weitere Steuereinrichtung kann auch Steuerungsfunktionen von der Bremssteuereinrichtung übernehmen, beispielsweise die Ansteuerung der Achsliftvorrichtung. Hierdurch können Eingriffe auch in einen benutzerkonfigurierbaren Teil der Bremssteuereinrichtung gering gehalten werden. Für die Bremssteuereinrichtungen können dadurch vorteilhafterweise auch kostengünstige einfach aufgebaute Bremssteuereinrichtungen und/oder Bremssteuereinrichtungen unterschiedlicher Hersteller eingesetzt werden.

Die weitere Steuereinrichtung mit durch den Benutzer vom Zugfahrzeug aus bedienbaren Eingabeeinrichtungen in Verbindung mit einer durch die weitere Steuereinrichtung ansteuerbaren Aktuatoreinrichtung, welche von der Bremssteuereinrichtung nicht betätigbar ist, ermöglicht auf vorteilhafte und einfache Weise eine Erweiterung der Steuerbarkeit von Anhängerfunktionen vom Zugfahrzeug aus, ohne in die wegen der Steuerung des Anhänger-Bremssystems besonders sicherheitsrelevante Bremssteuereinrichtung einzugreifen. Insbesondere kann über die Eingabeeinrichtung, vorzugsweise Tasten, Schalter, Felder einer Bildschirmdarstellung und dergleichen, ein Anweisungssignal zur Ansteuerung wenigstens eines Aktuators der Aktuatoreinrichtung eingegeben werden.

Die Ansteuerung eines Aktuators der Aktuatoreinrichtung kann in einer ersten vorzugsweise vorteilhaften Ausführung durch direkte Verdrahtung zwischen der weiteren Steuereinrichtung und dem Aktuator, beispielsweise einem elektrisch schaltbaren Fluidventil, einem Motor, einem Relais usw. erfolgen. In anderer Ausführung kann eine mehrere Aktuatoren mit der weiteren Steuereinrichtung verbindende Busleitung zur Signalübertragung vorgesehen sein, wofür die einzelnen Aktuatoren dann mit Adress- und Datendekodierern ausgestattet und individuell mit Steuersignalen adressierbar sind. Für eine solche Verbindung über eine Busleitung kann auch ein gegebenenfalls bereits vorhandenes Datenbussystem im Anhänger bzw. zwischen Zugfahrzeug und Anhänger mit benutzt sein. eine Verknüpfung eines Anweisungssignals nach Maßgabe einer Eingabe eines Benutzers mit einem Betriebszustandssignal erfolgt dabei vorteilhafterweise in der weiteren Steuereinrichtung.

In anderer vorteilhafter Ausführung kann ein Anweisungssignal nach Maßgabe der Eingabe eines Benutzers über den Signalpfad an die Bremssteuereinrichtung geleitet werden, welche ihrerseits, gegebenenfalls nach einer vorgebbaren Verknüpfung mit einem Betriebszustandssignal, einen Aktuator betätigt. Vorteilhafterweise erfolgt eine Rückmeldung über die Betätigung eines Aktuators von der Bremssteuereinrichtung an die weitere Steuereinrichtung.

Die weitere Steuereinrichtung ist vorteilhafterweise elektronisch programmierbar, so dass für verschiedene Fahrzeuganhängeranordnungen, für verschiedene Zugfahrzeug-Anhänger-Kombinationen oder für unterschiedliche Einsatzzwecke Möglichkeiten und Beschränkungen der Eingabe bzw. Ansteuerung der Aktuatoreinrichtung an den jeweiligen Einzelfall besonders gut angepasst werden kann.

Die weitere Steuereinrichtung kann in bevorzugter Ausführung ein anhängerseitiges angeordnetes Steuermodul und ein zugfahrzeugseitig anordenbares Bedienmodul enthalten. Bedienmodul sind zur Signalübertragung zumindest von dem Bedienmodul zu dem Steuermodul, vorzugsweise auch in Gegenrichtung eingerichtet. Die Signalübertragung kann auf an sich bekannte Weise erfolgen, insbesondere über eine mehradrige direkte Steuerleitung, über ein Bussystem, an welches auch andere Teilnehmer, insbesondere auch die elektronische Bremssteuereinrichtung angeschlossen sein können. Als ein solches Bussystem kann insbesondere auch ein zwischen Zugfahrzeug und Anhänger bestehendes Bussystem für die Signalübertragung mit ausgenutzt werden. In bevorzugter Ausführung ist zur Signalübertragung zwischen Bedienmodul und Steuermodul eine drahtlose Verbindung, vorzugsweise eine Funkverbindung vorgesehen. Letztere ermöglicht vorteilhafterweise die Handhabung des Bedienmoduls auch außerhalb des Zugfahrzeugs, beispielsweise während Belade- oder Entlade-Vorgängen. Leitungsgebundene Signalübertragung zwischen dem Bedienmodul und dem Steuermodul und drahtlose Signalübertragung können auch gemeinsam realisiert sein, wobei beide Übertragungsarten dieselben Signale umfassen können. In anderer vorteilhafter Ausführung kann vorgesehen sein, dass eine Übertragungsart für bestimmte Signale gesperrt ist, so dass z. B. über eine Funkverbindung keine Signale übertragbar sind, welche Anweisungen entsprechen, welche die Anwesenheit des Benutzers in der Fahrerposition erfordern, beispielsweise das Lösen einer angelegten Fertigerbremse.

Bedienmodul und Steuermodul können paarweise individuell einander zugeordnet sein, so dass jedem Steuermodul bzw. dem mit diesem verbundenen Anhänger genau ein bestimmtes Bedienmodul zugeordnet ist und Fremd-Steuereinwirkungen, z. B. bei Funkverbindungen ausgeschlossen werden können. In anderer Ausführung, insbesondere für leitungsgebende Signalübertragung können die Bedienmodule ohne individuelle Zuordnung auf Anhängertypen abgestimmt oder in wieder anderer Ausführung für mehrere Anhängertypen übergreifend verwendbar eingerichtet sein. Einheitlich ausgeführte Bedienmodule können durch Austausch spezifischer individueller Kennungen mit dem Steuermodul eines Anhängers auf den Signalzustand mit diesem Steuermodul eingerichtet werden. Übertragungsarten und gegebenenfalls Protokolle für die leitungsgebundene oder drahtlose Signalübertragung sind dem Fachmann bekannt.

Bei einer Aufteilung der Steuereinrichtung in ein zugfahrzeugseitig anordenbares Bedienmodul und ein am Anhänger angeordnetes Steuermodul kann das Bedienmodul und/oder vorzugsweise das Steuermodul elektronisch programmierbar sein. Das anhängerseitige Steuermodul bezieht seine Betriebsspannung vorzugsweise von der Bremssteuereinrichtung, insbesondere über einen der programmierbaren elektrischen Ausgänge der Bremssteuereinrichtung.

Beispielsweise kann vom Benutzer eine Anweisung in die weitere Steuereinrichtung eingegeben werden, die von der Bremssteuereinrichtung nach Maßgabe der Geschwindigkeit und/oder des Beladungszustands entgegen der automatischen Einstellung zwangsweise anzuheben, z. B. zur Traktionsverbesserung des Zugfahrzeugs, oder zwangsweise abzusenken. Die Bremssteuereinrichtung nimmt über den Signalpfad ein entsprechendes Steuersignal von der weiteren Steuereinrichtung auf und wirkt auf die Achsliftvorrichtung ein, wobei aber in der Bremssteuereinrichtung Sicherheitskriterien vorgegeben sind, welche gegenüber dem Steuersignal von der weiteren Steuereinrichtung vorrangig sind und die Ausführung der Anweisung unterbinden oder begrenzen können, beispielsweise auf eine kurze Zeitdauer und/oder auf einen Geschwindigkeitsbereich oberhalb oder unterhalb einer Geschwindigkeitsschwelle. In anderer Ausführung kann die weitere Steuereinrichtung eine Geschwindigkeitsinformation von der Bremssteuereinrichtung empfangen und die Ansteuerung der Achsliftvorrichtung und/oder die Entscheidung über die Zulässigkeit einer Anhebung selbst übernehmen.

In anderem Anwendungsbeispiel kann vom Benutzer über die weitere Steuereinrichtung eine Bremsfunktion mit mäßiger Bremskraft aktiviert werden, welche z. B. als sogenannte Fertigerbremse beim Entladebetrieb eines Kippers an einem Straßenfertiger vorteilhaft ist. Dabei wird der Kipper-Anhänger gegebenenfalls samt Zugfahrzeug von dem Straßenfertiger in dessen Fertigungsrichtung geschoben, während nach und nach Belagmaterial aus dem Kipper dem Straßenfertiger zugeführt wird. Um auch bei leicht abschüssiger Fahrbahn zu vermeiden, dass sich Kipper und Zugfahrzeug vom Straßenfertiger entfernen, kann über die Steueranweisung der Fertigerbremsfunktion ein definierter Bremsdruck eingestellt werden, so dass ein Schieben des Anhängers samt Zugfahrzeug durch den Straßenfertiger möglich ist, die Zugfahrzeug-Anhänger-Kombination aber nicht vom Fertiger wegrollt. Durch Verknüpfen mit einer Geschwindigkeitsinformation der Bremseinrichtung kann die Ausführung dieser Fertigerbremsanweisung auf einen für den Vorschub von Straßenfertigern typischen Geschwindigkeitsbereich beschränkt werden. Vorteilhafte Ausführungen zu einer solchen Fertigerbremsfunktion sind noch im Detail beschrieben.

In vorteilhafter Ausführung kann für die Übermittlung von Signalen zwischen Bremssteuereinrichtungen und weiterer Steuereinrichtungen vorgesehen sein, von der Bremssteuereinrichtung, welche mit der Sensoranordnung verbunden ist und von dieser Sensorsignale aufnimmt, wenigstens ein Betriebszustandssignal, welches einen den aktuellen Betriebszustand der Fahrzeuganhängeranordnung beschreibenden Parameter repräsentiert, zu übertragen. Der aktuelle Betriebszustand kann durch eine Mehrzahl von Parametern charakterisiert sein, von welchem aber nicht alle zur Übermittlung an die weitere Steuereinrichtung bedeutsam und vorgesehen sein müssen.

Ein solcher Parameter kann die aktuelle Geschwindigkeit des Anhängers sein, welche aus dem typischerweise mehreren Radsensoren ableitbar ist. Als Betriebszustandssignal kann ein jeweils aktueller digitalisierter Geschwindigkeitswert an die weitere Steuereinrichtung übertragen werden oder auch in vereinfachter Form nur ein zweiwertiges Signal, welches als Schwellwertsignal die Überschreitung oder Unterschreitung eines bestimmten Geschwindigkeitsschwellwerts angibt. Im letztgenannten Fall können für verschiedene Schwellwerte getrennte Signale vorgesehen sein.

Ein anderer Parameter kann die Neigung des Fahrzeugs sein, welche einerseits in der Bremssteuereinrichtung für ein Antiblockiersystem und ein elektronisches Stabilitätsprogramm wesentlich sein können, welche andererseits bei einem Kipper-Anhänger für die über die weitere Steuereinrichtung auslösbare Anhebung der Kippmulde von Bedeutung sein kann, insbesondere als Schwellwertsignal für die Fahrzeugneigung dahingehend, ob ein Kippvorgang eingeleitet werden darf, oder als Zeitverlauf eines Neigungswerts, ob sich die Fahrzeugneigung beim Einleiten eines Kippvorgangs in sicherheitsrelevantem Maß verändert und die Kippmulde eventuell entgegen der Benutzereingabe wieder abgesenkt werden muss.

Ein Betriebszustandssignal kann insbesondere auch ein Betätigungssignal für einen von der Bremssteuereinrichtung ansteuerbaren Aktuator sein. Beispielsweise kann bei einem durch die Bremssteuereinrichtung elektrisch ansteuerbaren Aktuator das Ansteuersignal abgegriffen und einem Eingang der weiteren Steuereinrichtung parallel zugeführt sein.

Die Übertragung eines Betriebszustandssignals von der Bremssteuereinrichtung an die weitere Steuereinrichtung ermöglicht zum einen die Anzeige relevanter Betriebszustände für den Benutzer und zum anderen die Verknüpfung der Betriebszustandssignale mit Benutzereingaben zw. die Sperrung oder Freigabe von Benutzereingaben nach Maßgabe der Betriebszustandssignale.

Der Signalpfad zwischen Bremssteuereinrichtung und weiterer Steuereinrichtung in eine oder beide Signalrichtungen kann direkte Verbindungen zwischen entsprechend eingerichteten Signal-Eingängen und Signal-Ausgängen der Bremssteuereinrichtung und der weiteren Steuereinrichtungen umfassen, wobei die Signal-Eingänge und Signal-Ausgänge vorzugsweise durch Programmierung der jeweiligen Einrichtungen den Signalarten und Funktionen zugewiesen sind. Der Signalpfad kann eine für verschiedene Signale gemeinsame Datenleitung zwischen Bremssteuereinrichtung und weiterer Steuereinrichtung umfassen. Der Signalpfad kann schließlich auch eine Datenbusleitung umfassen, an welche sowohl die Bremssteuereinrichtung als auch die weitere Steuereinrichtung sowie weitere Teilnehmer angeschlossen sind. Eine solche Datenbusleitung kann insbesondere auch zur Signalübertragung zwischen einem zugfahrzeugseitigen Bedienmodul und einem anhängerseitigen Steuermodul dienen. Eine Datenbusleitung zwischen der Bremssteuereinrichtung und der weiteren Steuereinrichtung ist vorteilhafterweise getrennt von der zur Übertragung von Bremssignalen zwischen Zugfahrzeug und Bremssteuereinrichtung vorhandenen Datenbusleitung. Die weitere Steuereinrichtung kann aber als reiner Datenempfänger ohne Sendestufe auch an einer solchen Datenbusleitung angeschlossen sein und auf diesem Weg Betriebszustandssignale von der Bremssteuereinrichtung empfangen.

Vorteilhafterweise kann die Aktuatoranordnung wenigstens einen von der weiteren Steuereinrichtung elektrisch ansteuerbaren Aktuator enthalten, welcher von der Bremssteuereinrichtung nicht ansteuerbar ist. Der Umfang der ansteuerbaren Aktuatoren ist dadurch auf vorteilhafter Weise erweiterbar, wobei durch die Übernahme von Signalen, insbesondere Betriebszustandssignalen von der Bremssteuereinrichtung in die weitere Steuereinrichtung über den wenigstens einen Signalpfad auf einfache Weise in der weiteren Steuereinrichtung Kriterien, z. B. Sicherheitskriterien, vorgegeben und überwacht werden können.

Eine drahtlose Funk-Signalübertragung zwischen Steuermodul und Bedienmodul erfolgt vorteilhafterweise in zur privaten Nutzung freien Frequenzbändern. Vorzugsweise erfolgt die Funk-Signalübertragung für die Steuerung mehrerer verschiedener Anhängerfunktionen über eine mehrkanalige Funkverbindung. Sende- und Empfangsmodule sind für solche Übertragungsarten mit funktechnischer Zulassung kostengünstig verfügbar.

Das Bedienmodul enthält in vorteilhafter Ausführung wenigstens ein Eingabeelement zur Ansteuerung wenigstens eines Aktuators der anhängerseitigen Aktuatoranordnung über das Steuermodul und eventuell die Bremssteuereinrichtung sowie wenigstens ein Ausgabeelement zur Ausgabe eines Statussignals zu einem Aktuator. Das Eingabeelement ist vorteilhafterweise ein monostabiler Tastschalter, welcher nach Betätigung selbsttätig in eine Ruhestellung zurückkehrt, vorzugsweise ein mechanischer Ein-Taster mit Federrückstellung. Für eine entsprechende Funktionsweise sind auch elektronische Berührungsschalter oder Folienschalter bekannt. Prinzipiell ist auch eine Spracheingabe anwendbar. Das Ausgabeelement kann vorteilhafterweise eine optische Anzeige und/oder eine akustische Anzeige umfassen. Bauelemente und Peripherieschaltungen für derartige Eingabeelemente und Ausgabeelemente sind bekannt und vielfältig verfügbar. Das Statussignal gibt dem aktuellen Status eines Aktuators mit durch dem Benutzer veränderbaren Status an, beispielsweise Liftachse angehoben oder abgesenkt.

Unterschiedliche Ausgabe-Informationen können optisch durch unterschiedliche Farben, unterschiedliche Formen oder Symbole und/oder unterschiedliche Anzeigepositionen und/oder Blinken angezeigt werden. Optische Anzeigeelemente sind in bevorzugter Ausführungsform Leuchtdioden.

Eine akustische Ausgabe unterschiedlicher Informationen kann z. B. durch unterschiedliche Tonhöhen und/oder unterschiedliche Tonfolgen erfolgen.

Neben Statussignalen können auch weitere Informationssignale ausgebbar sein, beispielsweise Betätigungssignale für ausgeführte Anweisungen, Ablehnungssignale für unzulässige Anweisungen usw.

In vorteilhafter Ausführung enthält die weitere Steuereinrichtung als Eingabeelement zur Betätigung eines zwischen zwei inständigen umschaltbar betätigbaren Aktuators, z. B. einer Achsliftvorrichtung lediglich einen Taster, über welchen ein Anweisungssignal zum Wechsel des Aktuatorzustands eingebbar ist. Vorteilhafterweise erfolgt eine Ansteuerung zur Umschaltung des Aktuatorzustands erst nach zweifacher Betätigung des Tasters, wobei nach einer ersten Betätigung, z. B. zur Absenkung der Liftachse, dem Benutzer der aktuelle Zustand des Aktuators ausgegeben wird, und der Benutzer innerhalb eines zeitlich begrenzten Intervalls durch erneutes Betätigen des Tasters die Umschaltung bestätigen kann, oder, wenn der aktuelle Zustand bereits dem angestrebten Zustand entspricht, durch Unterlassen einer zweiten Tasterbetätigung innerhalb des zeitbegrenzten Intervalls die Aktion abbricht. Das Intervall kann beispielsweise 3 bis 10 Sekunden umfassen. Während des Intervalls wird vorteilhafterweise ein besonderes Signal, z. B. ein Blinken einer optischen Anzeige oder ein definierter, gegebenenfalls unterbrochener Signalton ausgegeben.

In anderer vorteilhafter Ausführung können für unterschiedliche Anweisungen unterschiedliche Betätigungen von Eingabeelementen, z. B. Betätigen eines Doppeltasters in eine von zwei entgegen gesetzten Richtungen für Anheben oder Absenken einer Liftachse, oder je ein separates Eingabeelement für jede verschiedene Anweisung, also z. B. ein erster Taster zum Anheben und ein zweiter Taster zum Absenken.

Die Erfindung ist nachfolgend anhand bevorzugter Ausführungsbeispiele unter Bezugnahme auf die Abbildungen noch eingehend veranschaulicht. Dabei zeigt:
- Fig. 1: einen prinzipiellen Aufbau einer Bremssteuereinrichtung,
- Fig. 2: eine erste bevorzugte Ausführung einer Signalverbindung zwischen Bremssteuereinrichtung und weiterer Steuereinrichtung,
- Fig. 3: eine alternative Ausführung einer Signalverbindung zwischen Bremssteuereinrichtung und weiterer Steuereinrichtung,
- Fig. 4: eine Ausführungsform mit einem Datenbus als Signalverbindung,
- Fig. 5: eine vorteilhafte Ausführung eines Bedienmoduls einer weiteren Steuereinrichtung.

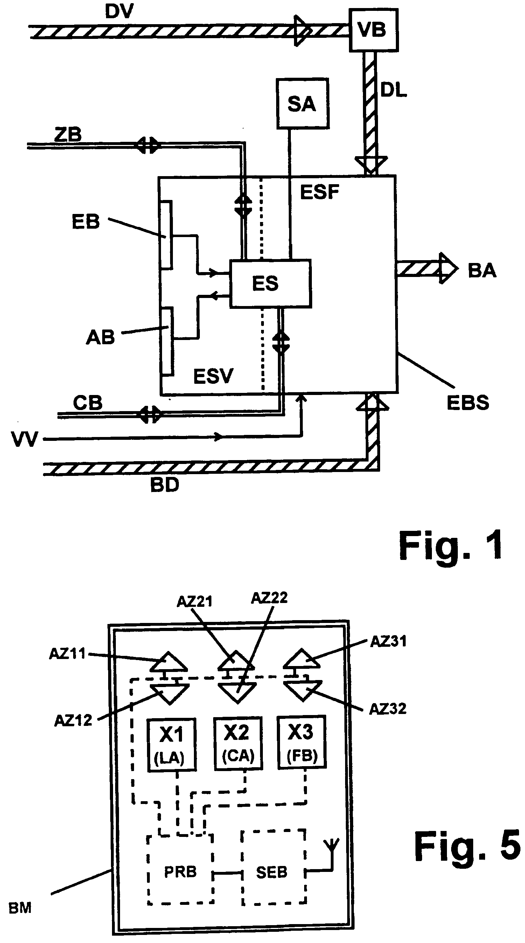

In Fig. 1 ist schematisch eine elektronische Bremssteuereinrichtung in einer Fahrzeuganhängeranordnung mit einigen Peripherieelementen skizziert, wobei die schematische Skizze im wesentlichen auf die für die weiteren Ausführungen benötigten bzw. zweckmäßigen Elemente beschränkt ist. Die realen elektronischen Bremssteuereinrichtungen, wie beispielsweise ein Trailer-EBS der Firmen Knorr, Haldex oder Wabco, sind demgegenüber relativ komplex aufgebaut.

Die Bremssteuereinrichtung enthält eine elektronische Steuereinheit ES, welche in den wesentlichen sicherheitsrelevanten Teilen vom Hersteller vorprogrammiert und vom Benutzer nicht veränderbar ist. Zusätzlich kann die Steuereinheit ES in nicht sicherheitskritischen Aspekten programmierbar sein, was in einer bevorzugten Ausführungsform der vorliegenden Erfindung ausgenutzt wird.

Die Bremssteuereinrichtung EBS ist in der Skizze in einen vom Benutzer nicht beeinflussbaren, von Herstellerseite der Bremssteuereinrichtung EBS festgelegten Teil ESF und einen begrenzt Veränderungen durch den Benutzer zulassenden variablen Teil ESV schematisch unterteilt.

Die Bremssteuereinrichtung ESB ist über eine Stromversorgungsleitung VV unabhängig von den übrigen elektrischen Verbrauchern des Anhängers vom Zugfahrzeug aus versorgt, typischerweise mit einer Spannung von 24 Volt. Gleichfalls vom Zugfahrzeug aus erfolgt die Versorgung der Bremssteuereinrichtung EBS mit Druckluft über eine Versorgungsleitung DV und einen anhängerseitigen Vorratsbehälter VB, aus welchem über eine Druckluftleitung DL Druckluft auf einen Versorgungseingang der Bremssteuereinrichtung geführt ist. Die Bremssteuereinrichtung EBS hat Druckluftausgänge zur Bremsanlage BA des Fahrzeugs, in welcher typischerweise eine Betriebsbremsanlage und eine Feststellbremsanlage unterschieden werden. Der Bremsdruck, mit welcher die Betriebsbremsanlage beaufschlagt wird, ist variabel und durch den Fahrer abhängig vom Druck auf das Bremspedal vorgebbar. Hierfür ist eine pneumatische Bremsdruckleitung BD auf einen pneumatischen Eingangsanschluss der Bremssteuereinrichtung EBS geführt, wo ein Drucksensor den Druck einer Bremsanforderung über die Bremsdruckleitung BD erfasst und die Betriebsbremsanlage mit einem entsprechenden Druck beaufschlagt. Zusätzlich kann ein CAN-Datenbus CB vorgesehen sein, welcher beispielsweise bei dem Trailer EBS von Knorr ein zugfahrzeugseitiges EBS mit dem anhängerseitigen EBS verbindet und über welchen gleichfalls ein variables Bremsanforderungssignal übertragbar ist. Dieser CAN-Datenbus CB ist aus Sicherheitsgründen nicht zum Anschluss weiterer Busteilnehmer vorgesehen.

Die Bremssteuereinrichtung EBS ist darüber hinaus mit einer externen Sensoranordnung SA, welche in Fig. 1 lediglich schematisch dargestellt ist und welche eine Mehrzahl einzelner Sensoren enthält, verbunden. Sensoren der Sensoranordnung SA sind beispielsweise Radumdrehungssensoren, Beschleunigungssensoren und/oder Neigungssensoren, Drucksensoren, Positionssensoren usw., welche für die Steuerung der Bremsanlage, insbesondere der Betriebsbremsanlage zur Fahrstabilisierung von Bedeutung sind. Die Fahrstabilisierung kann insbesondere die an sich bekannten Funktionen eines Antiblockiersystems (ABS), eines elektronischen Stabilisierungsprogramms (ESP) oder eines Rollstabilisierungsprogramms (RSP) umfassen. Die Bremssteuereinrichtung EBS enthält ferner mehrere interne Sensoren, insbesondere Drucksensoren zur Erfassung von pneumatischen Drücken, mit welchen einzelne Komponenten der Bremsanlage beaufschlagt sind.

Die Bremssteuereinrichtung EBS enthält in dem veränderbaren und auf individuelle Benutzerbedürfnisse abstimmbaren variablen Teil ESV einen oder mehrere elektrische Eingänge EB sowie einen oder mehrere elektrische Ausgänge AB. Die Ausgänge sind typischerweise binär umschaltbar zwischen Betriebsspannung der Bremssteuereinrichtung (z. B. 24 Volt) und Massepotential (0 Volt). In entsprechender Weise werden im Regelfall die elektrischen Eingänge EB der Bremssteuereinrichtung binär abgefragt in der Weise, ob eine Eingangssignalspannung über oder unter einem Schwellwert oder Schwellwertbereich liegt.

Von Bedeutung ist, dass die elektronische Steuereinrichtung es ermöglicht, aus Eingangsdaten der elektrischen Anschlüsse EB und aus im nicht veränderbaren Teil ESF vorliegenden Daten z. B. der externen Sensoranordnung oder der internen Sensoren nach programmierbaren Vorschriften einzelne Ausgänge des Blocks elektrischer Ausgänge AB individuell und, soweit die Eingangsgrößen veränderlich sind, veränderlich zu schalten. Beispielsweise kann die Bremssteuereinrichtung in bekannter Weise aus dem über Drucksensoren erkannten Beladungszustand eine vollautomatische Steuerung einer Achsliftvorrichtung und/oder eine geschwindigkeitsabhängige Rückstellung der Luftfederung bei eventuell im Stand abgesenktem Chassis vornehmen. An einem Ausgang kann ein geschwindigkeitsabhängiges Signal abgegeben werden, welches anzeigt, ob die aktuelle Geschwindigkeit über oder unter einer vorgebbaren Geschwindigkeitsschwelle liegt. Aus den Radumdrehungssensoren kann ferner ein Wegsignal abgeleitet und als Taktsignal an einen externen Kilometerzähler gegeben werden.

Zusätzlich kann vorgesehen sein, dass ein weiterer Datenbus z. B. zu der Bremssteuereinrichtung geführt wird, an welchen auch weitere Teilnehmer anschließbar sind.

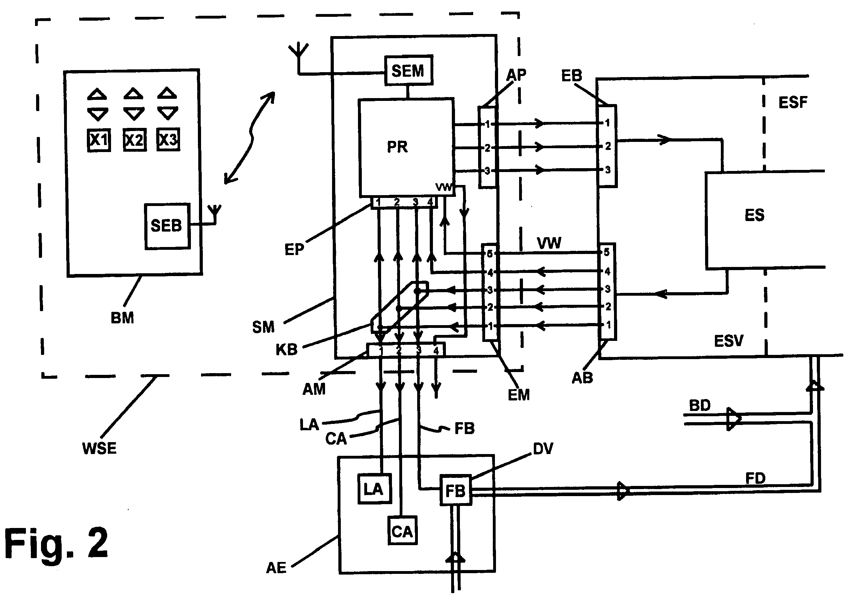

Fig. 2 zeigt eine bevorzugte Ausführung einer Anschlussmöglichkeit einer weiteren Steuereinrichtung an eine hier nur noch ausschnittsweise dargestellte Bremssteuereinrichtung EBS.

Die weitere Steuereinrichtung WSE enthalte in bevorzugter Weise ein anhängerseitig fest installiertes Steuermodul SM sowie ein von diesem getrenntes, im Führerhaus des Zugfahrzeugs anordenbares und vorzugsweise von dort entnehmbares und mobil benutzbares, tragbares Bedienmodul BM. Bedienmodul BM und Steuermodul SM der weiteren Steuereinrichtung WSE stehen vorteilhafterweise über eine Kommunikationsverbindung, vorzugsweise eine drahtlose Funkverbindung in signalübertragender Verbindung. Eine vorteilhafte Ausführung des Bedienmoduls und der Signalübertragung zwischen Bedienmodul und Steuermodul ist anhand von Fig. 5 noch eingehend veranschaulicht.

Die weitere Steuereinrichtung WSE enthält vorteilhafterweise wenigstens eine programmierbare elektronische Einheit, beispielsweise einen programmierbaren Mikrocontroller PR, welcher vorzugsweise in dem Steuermodul SM angeordnet ist. Auch das Bedienmodul BM kann eine derartige programmierbare elektronische Einheit enthalten.

Bedienmodul und Steuermodul enthalten jeweils Sende-Empfangsmodule SEB bzw. SEM, welche in Sendemodule und Empfangsmodule unterteilt sein oder vorzugsweise kombinierte Sende-Empfangsmodule bilden können.

Der Aufbau des Steuermoduls SM ist in Fig. 2 lediglich schematisch durch Darstellung des Sendeempfangsmoduls SEM, eines Mikrocontrollers PR und eines Klemmenblocks KB ohne weitere Peripheriebeschaltung skizziert. Eingezeichnet sind Anschlussblöcke für Signalausgänge AP und Signaleingänge EP des Controllers, für Signaleingänge EM und Signalausgänge AM des Steuermoduls SM sowie für Signaleingänge EB und Signalausgänge der Bremssteuereinrichtung EBS. Die Signaleingänge und Signalausgänge sind jeweils mit Ziffern von 1 bis 3 bzw. 1 bis 4 bzw. 1 bis 5 durchnumeriert. Einzelne Anschlüsse oder Signale an einzelnen Anschlüssen sind nachfolgend auch aus der Benennung eines Anschlussblocks, z. B. AP, und einer Nummer, z. B. 2, innerhalb dieses Blocks durch eine kombinierte Bezeichnung, z. B. AP2, individuell bezeichnet. In der in Fig. 2 skizzierten bevorzugten Ausführungsform sind im Bedienmodul BM Eingabeelemente X1, X2, X3 einer Eingabeeinrichtung zu drei unterschiedlichen, vom Benutzer kommandierbaren Funktionen einer Aktuatoreinrichtung AE im Fahrzeuganhänger vorgesehen. Durch Betätigung der Eingabeelemente X1, X2, X3 können Anweisungssignale an das Steuermodul SM über die drahtlose Signalverbindung FV übertragen werden, welche im Steuermodul SM erkannt und in Ausgangssignale AP1, AP2 bzw. AP3 am Ausgang AP des Controllers PR umgesetzt werden. Die Ausgangssignale des Controllers sind in bevorzugter einfacher Ausführung zweiwertig und können zwischen zwei Signalpegeln insbesondere 0 Volt und annähernd Versorgungsspannung VW des Steuermoduls umgeschaltet werden.

Die Ausgänge AP1 bis AP3 des Controllers sind vorteilhafterweise über ein mehradriges Kabel mit den Eingangsanschlüssen EB der Bremssteuereinrichtung verbunden, wobei angenommen sei, dass ein Ausgangssignal AP1 des Controllers ein Eingangssignal EB1 der Bremssteuereinrichtung bilde und entsprechende eindeutige Zuordnungen für AP2-EB2 und AP3-EB3 gegeben sind. Die Zahl der Verbindungen zwischen Ausgängen AP des Controllers und Eingängen EB der Bremssteuereinrichtungen ist typischerweise beschränkt durch Begrenzung der Anzahl der Eingänge EB auf Seiten der Bremssteuereinrichtung.

Vom Controller über die Ausgänge AP und die Eingänge EB an die Bremssteuereinrichtung EBS übermittelte Signale sind der programmierbaren elektronischen Einheit ES der Bremssteuereinrichtung zugeführt und können dort nach programmierbaren Zuordnungsvorschriften untereinander und/oder insbesondere mit weiteren in der Bremssteuereinrichtung vorliegenden Informationen, insbesondere Sensorsignalen zu Ausgangssignalen der elektronischen Einheit ES verknüpft werden. Die Ausgangssignale der programmierbaren elektronischen Einheit ES sind den einzelnen Ausgangsanschlüssen AB der Bremssteuereinrichtung zugeführt. Diese Ausgänge AB sind mit Eingängen EM des Steuermoduls verbunden.

In besonders vorteilhafter Ausführungsform kann die elektrische Versorgungsleistung des Steuermoduls aus der Bremssteuereinrichtung EBS entnommen werden, indem einer der Ausgänge AB, im skizzierten Beispiel der Ausgang AB5, durch entsprechende Programmierung der elektronischen Einheit ES dauerhaft und unabhängig von Eingangssignalen oder Sensorsignalen der Bremssteuereinrichtung auf einen Signalpegel gesetzt ist, welcher das Steuermodul SM mit elektrischer Leistung versorgt. Vorzugsweise ist ein solcher Signalpegel VW im wesentlichen gleich der Versorgungsspannung VV, mit welcher auch die Bremssteuereinrichtung EBS aus dem Zugfahrzeug mit elektrischer Leistung versorgt ist. Die elektrische Leistungsversorgung des Steuermoduls SM aus der elektrischen Leistungsversorgung der Bremssteuereinrichtung EBS ist besonders vorteilhaft, da über die üblichen Steckverbindungen zwischen Zugfahrzeug und Anhänger zur Versorgung verschiedener Leistungsverbraucher, insbesondere Beleuchtungseinrichtungen des Anhängers, keine zuverlässig dauerhafte Spannungsversorgung des Steuermoduls SM mit geeignetem Spannungspegel verfügbar ist. Die Bremssteuereinrichtung ist aus Sicherheitsgründen über eine separate Leitung aus dem Zugfahrzeug mit elektrischer Leistung versorgt.

Die Übertragung elektrischer Versorgungsleistung von der Bremssteuereinrichtung an das Steuermodul SM über einen der schaltbaren Signalausgänge AB der Bremssteuereinrichtung ist besonders vorteilhaft, da diese Ausgänge zum benutzerkonfigurierbaren Anschluss von Verbrauchern vorgesehen sind und die Verwendung eines solchen Ausgangsanschlusses kein weitergehender Eingriff in die Bremssteuereinrichtung EBS, insbesondere deren Anschluss an das Zugfahrzeug im sicherheitsrelevanten Abschnitt ESF erfordert. Die Ausgangsanschlüsse AB der Bremssteuereinrichtung EBS sind zwar typischerweise zur umschaltbaren Ansteuerung von Aktuatoren der Fahrzeuganhängeranordnung vorgesehen, durch die Programmierbarkeit der elektronischen Einheit ES kann aber ein solcher Ausgangsanschluss der Bremssteuereinrichtung in der beschriebenen besonders vorteilhaften Ausführung zur elektrischen Leistungsversorgung des anhängerseitigen Steuermoduls eingesetzt werden.

Für die mehreren Ausgangsanschlüsse AB kann in der Bremssteuereinrichtung EBS ein Steckverbinderanschluss vorbereitet vorliegen.

Die Ausgangsanschlüsse AB1, AB2 und AB3 der Bremssteuereinrichtung EBS seien im vorliegenden Fall als Signalleitungen zur Ansteuerung von mehreren Aktuatoren einer Aktuatoreinrichtung AE im Fahrzeuganhänger mit Funktionen entsprechend den Eingabeelementen X1, X2, X3 im Bedienmodul vorgesehen. Die einzelnen Ausgangsanschlüsse AB1, AB2 und AB3 der Bremssteuereinrichtung können prinzipiell über einzelne Leitungen direkt mit einzelnen Aktuatoren der Aktuatoreinrichtung AE zur Ansteuerung der Aktuatoren verbunden sein. Besonders vorteilhaft ist eine in Fig. 2 skizzierte Ausführung, bei welcher Verbindungsleitungen von den Ausgängen AB der Bremssteuereinrichtung zunächst dem Steuermodul SM zugeführt sind und dort in einem Klemmenblock KB, welcher stellvertretend für die Verzweigung von Signalleitungen steht und nicht zwingend als eine Mehrzahl mechanischer Kontaktklemmen verstanden werden muss, sondern auch z. B. Lötverbindungen als Varianten elektrischer Kontaktierung umfassen soll, verzweigt sind, wobei die von der Bremssteuereinrichtung EBS abgegebenen Ausgangssignale an den Anschlüssen AB1, AB2 und AB3 aus den Leitungsblöcken zum einen zur Erfüllung der Ansteuerfunktion für die Aktuatoren über Ausgangsanschlüsse AM des Steuermoduls SM auf die einzelnen Aktuatoren der Aktuatoreinrichtung Al geführt sind. Zugleich sind die Ausgangssignale von den Ausgängen AB1, AB2 und AB3 auf Signaleingänge EP des Controllers PR geführt. Hierdurch ist auf besonders vorteilhafte Weise eine Signalrückmeldung an den Controller zu dessen über die Ausgänge AP an die Bremssteuereinrichtung abgegebenen Signalen erreichbar. Die Verarbeitung solcher Rückmeldungssignale in dem Steuermodul SM bzw. dem programmierbaren Controller PR kann auf weitgehend in das Belieben des Benutzers gestellte Weise und insbesondere unabhängig von der Bremssteuereinrichtung EBS erfolgen.

In anderer Ausführung können über die Verbindungsleitungen zwischen den Ausgängen AB der Bremssteuereinrichtung EBS und den Eingängen EM des Steuermoduls auch in der programmierbaren Einheit ES der Bremssteuereinrichtung generierte Signale übertragen werden, welche nicht als Ansteuersignale für Aktuatoren dienen, sondern nur einem oder mehreren Signaleingängen des Controllers PR zugeführt sind und in diesem zur Erzeugung oder Modifizierung der Signale an den Ausgängen AP und/oder für Signale an das Bedienmodul über die Funkverbindung FV dienen. In Fig. 2 ist hierfür der Ausgangsanschluss AB4 der Bremssteuereinrichtung eingesetzt, über welchen z. B. ein Geschwindigkeitsschwellsignal über den Eingangsanschluss EM4 nur auf den Eingang EP4 des Controllers geleitet ist.

In wieder anderer Ausführungsform kann auch der Controller über einen Ausgang AM4 des Steuermoduls SM einen Aktuator direkt ohne Umweg über die Bremssteuereinrichtung ansteuern.

Die mehradrigen Leitungsverbindungen zwischen Ausgängen AP des Steuermoduls und Eingängen EB der Bremssteuereinrichtung bzw. zwischen Ausgängen AB der Bremssteuereinrichtung und Eingängen EM des Steuermoduls können über mehradrige Kabel mit Steckverbinderanschlüssen, insbesondere auf Seiten der Anschlüsse EB und AB der Bremssteuereinrichtung ausgeführt sein. Im skizzierten Beispiel sind die Eingangsanschlüsse EM1, EM2 und EM3 des Steuermoduls SM über den Klemmenblock KB oder eine entsprechende Leitungsverzweigung fest den Ausgängen AM1, AM2 und AM3 des Steuermoduls zugeordnet. Eine solche Zuordnung kann auch über den programmierbaren Controller variabel gestaltet sein, in dem der Klemmenblock KB ganz oder teilweise elektronisch steuerbare Schalter enthält.

Für die Art der steuerbaren Anhängerfunktionen sind nachfolgend noch einige besonders vorteilhafte Beispiele angegeben, welche durch Abkürzung der Funktionen auch in Fig. 2 eingetragen sind.

Eine erste Anhängerfunktion kann beispielsweise eine in Fig. 2 mit LA abgekürzte Liftachsenfunktion sein, welche das Anheben oder Absenken einer Liftachse eines mehrachsigen Anhängers steuert. Die Bremssteuereinrichtung kann hierfür in an sich bekannter Weise für eine vom Beladungszustand abhängige automatische Steuerung einer Achsliftvorrichtung vorbereitet sein, indem unterhalb einer vorgebbaren Beladungsschwelle die Liftachse angehoben und oberhalb der Beladungsschwelle die Liftachse abgesenkt wird. Die Bremssteuereinrichtung EBS steuert hierfür ohne Anweisungssignal über den Signalausgang AB1 der Bremssteuereinrichtung und Leitungsführung durch das Steuermodul hindurch ein Liftachsventil eigenständig an. Da das Ansteuersignal vom Ausgang AB1 zugleich als Eingangssignal am Eingang EP1 des Controllers PR anliegt, ist der aktuelle Zustand der Achsliftvorrichtung, d. h. Liftachse angehoben oder Liftachse abgesenkt, als Eingangssignal in dem Steuermodul SM der weiteren Steuereinrichtung WSE vorliegend und kann dort, insbesondere in dem Bedienmodul BM angezeigt werden, was als dauerhafte Anzeige oder lediglich auf Anforderung durch den Benutzer erfolgen kann.

Durch Eingabe eines Anweisungssignals durch den Benutzer in das Bedienmodul BM kann zudem der von der Bremssteuereinrichtung automatisch eingestellte Zustand der Achsliftvorrichtung zwangsweise geändert werden, indem ein entsprechendes Signal nach Maßgabe einer Benutzereingabe über das Eingabeelement X1 an das Steuermodul insbesondere über die Funk-Signalverbindung FV übermittelt und vom Controller in ein Steuersignal am Ausgang AP1 an die Bremssteuereinrichtung übermittelt wird. In der Bremssteuereinrichtung wird vorteilhafterweise ein solches Anweisungssignal des Benutzers mit aus Sensorsignalen vorliegenden Informationen nach vorgebbaren, beispielsweise auch durch gesetzliche Bestimmungen vorgegebenen Zuordnungsvorschriften verknüpft. Beispielsweise gibt es Bestimmungen, dass auch bei voll beladenem Anhänger ein Anheben der Liftachse für einen begrenzten Zeitraum von 90 Sekunden oder innerhalb eines Geschwindigkeitsbereichs bis maximal 30 km/h zulässig ist. Die Verknüpfung mit der Geschwindigkeit ist in der programmierbaren Einheit ES der Bremssteuereinrichtung auf einfache Weise möglich, da dort über Radsensoren die Geschwindigkeitsinformation ständig verfügbar vorliegt. Ein von dem Steuermodul SM empfangenes Anweisungssignal, die aufgrund der automatischen Steuerung abgesenkte Liftachse anzuheben, kann daher von der Bremssteuereinrichtung z. B. bei geringer Geschwindigkeit akzeptiert und in ein verändertes Ansteuersignal am Ausgang AB1 für die Achsliftvorrichtung umgesetzt werden. Bei höherer Geschwindigkeit wird die Anforderung zur Anhebung der Liftachse in einem solchen Fall in der Bremssteuereinrichtung EBS bzw. deren programmierbarer Einheit ES ignoriert und das Ansteuersignal am Ausgang AB1 bleibt in der abgesenkten Liftachse entsprechenden Signalzustand. Am Signaleingang EP1 des Controllers PR im Steuermodul wird erkannt, ob die gegebene Anweisung, die Liftachse anzuheben, in der Bremssteuereinrichtung akzeptiert oder ignoriert wurde. Ein entsprechendes Signal kann von dem Steuermodul an das Bedienmodul übermittelt und dort dem Benutzer angezeigt werden.

Zur Berücksichtigung der erwähnten zeitlichen Begrenzung der zwangsweisen Anhebung der Liftachse kann je nach Ausstattung der programmierbaren Einheit ES mit einer Zeitmesseinrichtung die Zeitbegrenzung in der Bremssteuereinrichtung EBS überwacht werden oder eine solche Überwachung in dem Steuermodul SM mittels einer dort realisierten Zeitmesseinrichtung erfolgen.

Eine bei geringer Beladung des Anhängers durch die Bremssteuereinrichtung automatisch angehobene Liftachse kann vom Benutzer zwangsweise abgesenkt werden, wobei hierfür typischerweise keine beschränkenden Vorschriften vorliegen, solche Beschränkungen aber benutzerdefiniert in dem Steuermodul SM oder in der Bremssteuereinrichtung programmiert werden können.

Eine weitere beispielhafte Anhängerfunktion sei durch ein pneumatisch gegenüber einer Fahrstellung absenkbares Chassis gegeben, insbesondere für einen Kipperanhänger, bei welchem ein abgesenktes Chassis beim Kippvorgang eine höhere Standfestigkeit bedeutet. Eine Absenkung des Chassis durch Entlüften der pneumatischen Federbälge einer pneumatischen Federung des Anhängers sei durch den Benutzer mittels des Eingabeelements X2 im Bedienmodul kommandierbar, was über die Funk-Signalverbindung FV und das Steuermodul die Abgabe eines entsprechenden Anweisungssignals über den Ausgang AP2 zum Eingang EB2 der Bremssteuereinrichtung führt. Dort kann wiederum ein solches Anweisungssignal mit einer Information über eine oder mehrere Betriebszustandsgrößen nach einer vorgebbaren Vorschrift verknüpft werden, beispielsweise kann vorgegeben sein, dass eine Absenkung des Chassis nur zulässig sein soll, wenn sich das Fahrzeug mit einer Geschwindigkeit unterhalb einer vorgegebenen Geschwindigkeitsschwelle bewegt und/oder wenn die Seitenneigung oder die Längsneigung des Fahrzeugs kleiner ist als vorgegebene Winkelschwellwerte gegenüber der Horizontalen. Diese Parameter können auch zusätzlich noch mit weiteren Betriebszustandsgrößen, wie beispielsweise der Beladung verknüpft sein, z. B. in der Weise dass bei stärkerer Beladung die Schwellwerte für die Neigungswinkel anders liegen als bei geringerer Beladung.

Erkennt die Bremssteuereinrichtung in ihrer programmierbaren Einheit ES das Vorliegen eines Anforderungssignals zum Absenken des Chassis und sind zugleich die vorprogrammierten Zulässigkeitsbedingungen erfüllt, so ändert die programmierbare Einheit ES den Signalzustand am Ausgang AB2 von Fahrstellung des Chassis in den Fahrzustand entsprechend abgesenktem Chassis, was als Ansteuersignal auf z. B. pneumatische Ventile in der Aktuatoreinrichtung AE für die pneumatische Fahrzeugfederung über den Eingang EM2 und den Ausgang AM2 des Steuermoduls geleitet wird. Auch hier dient wieder das am Ausgang AB2 abgegebene Ansteuersignal für den zugeordneten Aktuator in der Aktuatoreinrichtung AE zugleich als den Zustand der Chassisabsenkung signalisierendes Eingangssignal am Eingang EP2 des programmierbaren Controllers PR im Steuermodul und kann dem Benutzer signalisiert werden.

In entsprechender Weise kann vom Benutzer über das Bedienmodul das Ein- und Ausfahren eines Unterfahrschutzes am Heck des Anhängers, ein Öffnen und Schließen eines Schiebeverdeckes über dem Anhänger, ein Lösen oder Einrasten einer Verriegelung eines ausziehbaren Chassis und ähnliche Funktionen kommandiert werden.

In Fig. 2 ist eine über das Eingabeelement X3 des Bedienmoduls kommandierbare weitere besondere Funktion dargestellt, welche eine sogenannte Fertigerbremse betrifft. Die Funktion der Fertigerbremse ist von Bedeutung beim Betrieb eines Kippfahrzeugs in Verbindung mit einem Straßenfertiger, wobei das Fahrzeug zum fortlaufenden Beschicken des Fertigers mit Belagmaterial aus der Kippmulde des Fahrzeugs an dem Fertiger anliegt und von diesem mit dessen Vorschubgeschwindigkeit geschoben wird. Um ein Entfernen des Kipperfahrzeugs vom Fertiger bei abschüssiger Fahrbahn zu verhindern, gleichzeitig aber ein Schieben des Kipperfahrzeugs durch den Fertiger zu ermöglichen, ist die Betriebsbremsanlage des Kipperfahrzeugs mit einem definierten Bremsdruck beaufschlagt. Zum Anlegen einer solchen Fertigerbremse in der Betriebsbremsanlage des Fahrzeugs wird vom Benutzer über das Eingabeelement X3 des Bedienmoduls BM ein entsprechendes Anweisungssignal gegeben, welches von dem Steuermodul über den Ausgangsanschluss AP3 an den Eingang EB3 der Bremssteuereinrichtung und deren programmierbare Einheit ES übermittelt wird. Das Anforderungssignal zum Anlegen der Fertigerbremse an wiederum an besondere Bedingungen geknüpft sein, beispielsweise an die Bedingung, dass die Fertigerbremse nur im Stillstand oder nur bei sehr geringen Geschwindigkeiten des Kipperfahrzeugs zulässig ist. Die Geschwindigkeitsinformation liegt in der Bremssteuereinrichtung ständig vor, so dass eine Zulässigkeitsprüfung in der programmierbaren Einheit ES der Bremssteuereinrichtung ohne weiteres möglich ist und bei Erfüllung der Zulässigkeitsbedingungen an sich bereits in der Bremssteuereinrichtung ein gültiges Anforderungssignal zum Anlegen der Fertigerbremse vorläge.

Typischerweise ist aus Sicherheitsgründen ist ein solcher Signalweg einer Bremsanforderung nicht zulässig. Ein Bremsanforderungssignal für die Betriebsbremsanlage wird von der Bremssteuereinrichtung EBS nur über die Bremsdruckleitung BD oder den Datenbus CB vom Zugfahrzeug aus akzeptiert.

Für das Anlegen einer Fertigerbremse in der Betriebsbremsanlage des Anhängers wird dann bei einer erfindungsgemäßen Anordnung von der Bremssteuereinrichtung bzw. deren programmierbarer Einheit ES nach Vorliegen eines Anforderungssignals von der weiteren Steuereinrichtung WSE über den Ausgang AP3 des Steuermoduls und den Eingang EB3 der Bremssteuereinrichtung ein Ausgangssignal am Ausgang AB3 der Bremssteuereinrichtung ausgegeben, welches einem Aktuator der Aktuatoreinrichtung AE zugeführt ist. Ein solcher Aktuator kann insbesondere ein elektrisch steuerbares Druckbegrenzerventil DV sein, welches aus dem Druckluft-Vorratsbehälter des Anhängers gespeist ist und an seinem Ausgang auf einer pneumatischen Leitung FD einen auf einen voreingestellten Wert entsprechend dem vorgesehenen Bremsdruck für die Fertigerbremse ein pneumatisches Signal abgibt, welches über eine Leitungsverzweigung mit der Bremsdruckleitung BD am pneumatischen Steuereingang der Bremssteuereinrichtung EBS vereint wird. Dieses pneumatische Bremsanforderungssignal wird von der Bremssteuereinrichtung, wie ein durch Pedaldruck des Fahrers ausgelöstes Bremsanforderungssignal akzeptiert und in eine Beaufschlagung der Betriebsbremsanlage mit dem für die Fertigerbremse vorgesehenen Bremsdruck umgesetzt. Da die Fertigerbremse nur im Fahrzeugstillstand oder bei sehr niedrigen Geschwindigkeiten angelegt wird, ist ein solcher Eingriff in das Bremssystem unkritisch. Vorteilhafterweise kann in der Bremssteuereinrichtung EBS oder der weiteren Steuereinrichtung anhand einer Verknüpfung mit einem aktuellen Geschwindigkeitssignal die Zulässigkeit des Anlegens der Fertigerbremse überprüft und bei Nichterfüllen eines Zulässigkeitskriteriums ein Signal am Ausgang AB3 bzw. AP3 unterbunden werden.

Soweit eine Bremssteuereinrichtung EBS dahingehend eingerichtet ist, dass ein Bremsanforderungssignal auch über einen der Eingänge EB möglich ist, kann das Druckbegrenzerventil und der diesem zugeordnete Ausgang AB3 der Bremssteuereinrichtung entfallen, letzterer aber eventuell auch noch als Bestätigungssignal an die weitere Steuereinrichtung erhalten bleiben. Das Anlegen der Fertigerbremse wird dann in der Bremssteuereinrichtung allein aus dem Anforderungssignal vom Ausgang AP3 des Steuermoduls der weiteren Steuereinrichtung an den Eingang EB3 der Bremssteuereinrichtung veranlasst, wobei in der Bremssteuereinrichtung der zugeordnete Bremsdruck für diese Bremsanforderung vordefiniert sein kann, so dass das Signal am Ausgang AP3 nur zweiwertig ausgelegt sein kann. Bei feiner gestuftem Bremsanforderungssignal vom Steuermodul an die Bremssteuereinrichtung kann der Bremsdruck auch in dem Bremsanforderungssignal kodiert sein. Vorteilhafterweise kann in der Bremssteuereinrichtung eine Zulässigkeitsverknüpfung, z. B. mit einem Geschwindigkeitssignal, programmiert sein, so dass die Fertigerbremse nur unter bestimmten Randbedingungen anlegbar ist.

Eine Verknüpfung von Anweisungssignalen des Benutzers mit weiteren Bedingungen, insbesondere unter Einschluss von Betriebszustandsgrößen des Fahrzeugs kann alternativ oder zusätzlich zur Verknüpfung in der Bremssteuereinrichtung EBS auch in der weiteren Steuereinrichtung WSE selbst erfolgen. Solche Betriebszustandsgrößen können der weiteren Steuereinrichtung WSE von der Bremssteuereinrichtung bereit gestellt werden, beispielsweise Geschwindigkeits-Schwellwertsignale, wie als Beispiel zum Ausgangsanschluss AB4 erwähnt, oder in Stufen aufgelöste Geschwindigkeitssignale selbst. Solche Informationssignale können von der Bremssteuereinrichtung EBS unaufgefordert in regelmäßigen Abständen oder auf konkrete Informationsanforderung von der weiteren Steuereinrichtung an diese übertragen werden.

Sofern Anweisungssignale von dem Steuermodul über die Signalverbindungen AP-EB nur als Schaltsignal und nicht als dauerhafte Signale abgegeben werden, können auch mehrere Ausgangs-Eingangsverbindungen als digitales Wort kodiert werden.

Aufgrund der typischerweise auf eine geringe Anzahl von Eingängen und Ausgängen beschränkten Bremssteuereinrichtung EBS ist für eine umfangreichere Datenübertragung zwischen Bremssteuereinrichtung und weiterer Steuereinrichtung vorteilhafterweise ein Datenbus eingerichtet, welcher wegen der Sicherheitsvorschriften für die Benutzung des Datenbusses CB vorteilhafterweise von diesem getrennt ist. Ein solcher Datenbus kann vorteilhafterweise vom Typ der in Fahrzeugen häufig eingesetzten CAN-Datenbusse sein.

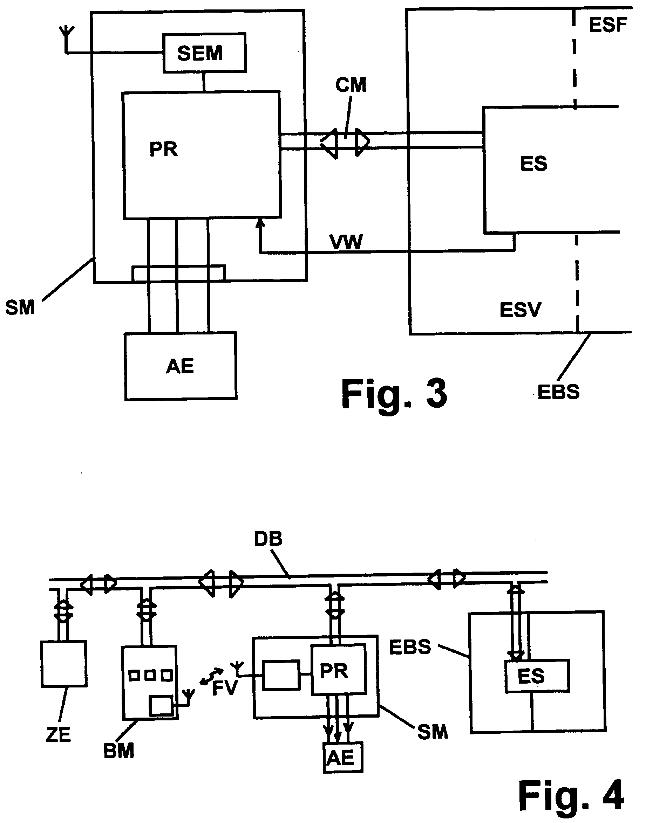

In Fig. 4 ist eine Ausführungsform skizziert, bei welcher ein solcher Datenbus CM zwischen dem programmierbaren Controller PR des Steuermoduls SM und der programmierbaren Einheit ES der Bremssteuereinrichtung EBS eingerichtet ist. Über den Datenbus CM können insbesondere Betriebszustandssignale, wie beispielsweise Sensorsignale der mit der Bremssteuereinrichtung verbundenen Sensoranordnung SA oder daraus abgeleitete Signale von der Bremssteuereinrichtung zum Steuermodul übertragen werden. Eine Überprüfung von beispielsweise Zulässigkeitskriterien zu bestimmten Anweisungssignalen des Benutzers kann in der programmierbaren Einheit ES der Bremssteuereinrichtung ähnlich der zu Fig. 2 beschriebenen Weise vorgenommen werden, wird aber bei Vorliegen eines Datenbusses CM vorzugsweise in der weiteren Steuereinrichtung WSE, insbesondere in dem programmierbaren Controller PR des Steuermoduls SM vorgenommen und in Ansteuersignale für Aktuatoren der Aktuatoreinrichtung AE umgesetzt werden. In Fig. 3 ist schematisch wieder die elektrische Leistungsversorgung des Steuermoduls aus der Bremssteuereinheit mit einem Versorgungsspannungspegel VW angedeutet.

Ein Datenbus CM und eine Signalverbindung über diskrete Einzel-Signalleitungen, wie in Fig. 2, kann kombiniert realisiert sein. In Fig. 3 ist die Ansteuerung von Aktuatoren der Aktuatoreinheit AE nur über das Steuermodul SM direkt vorgesehen. Es können selbstverständlich auch Aktuatoren von der Bremssteuereinrichtung ansteuerbar mit dieser verbunden sein.

Während in Fig. 3 eine Datenbusverbindung CM zwischen Bremssteuereinrichtung EBS und Steuermodul SM der weiteren Steuereinrichtung vorgesehen ist, ist in einer Ausführungsform nach Fig. 4 ein Datenbus DB vorgesehen, an welchen neben der Bremssteuereinrichtung EBS und dem Steuermodul SM auch noch Einrichtungen ZE im Zugfahrzeug und über eine dort befindliche Schnittstelle auch das Bedienmodul BM angeschlossen sein können. Eine Kommunikation zwischen dem Bedienmodul BM und dem Steuermodul SM kann sowohl über den Datenbus DB als auch über die Funk-Signalverbindung FV erfolgen, wobei auch eine Unterscheidung nach Art der auszutauschenden Signale getroffen werden kann, beispielsweise indem Signale von dem Steuermodul SM zur Auslösung von Anzeigen im Bedienmodul BM uneingeschränkt über Datenbus DB und/oder Funk-Signalverbindung FV übertragbar sind, hingegen Anweisungssignale zur Auslösung von Aktuatorfunktionen im Anhänger teilweise nur über den Datenbus DB möglich sind, so dass solche Anweisungen nur während der Anwesenheit des Fahrers im Zugfahrzeug gegeben werden können, nicht hingegen versehentlich bei außerhalb des Fahrzeuges mitgenommenem Bedienmodul BM.

In Fig. 5 ist eine durch ihre Einfachheit bevorzugte Ausführung eines Bedienmoduls BM skizziert. Dieses enthält mehrere Eingabeelemente X1, X2, X3 wie in dem Beispiel zu Fig. 2. Diese Eingabeelemente sind als Taster-Schaltelemente, insbesondere als mechanische Taster, aber auch als Berührungseingabefelder oder Folientaster, ausgeführt. Eine Signalübertragung erfolgt zwischen Bedienmodul und Steuermodul über die Funkverbindung FV vorteilhafterweise über eine mehrkanalige Funkverbindung, wobei jeder Kanal einer der durch die Eingabeelemente X1, X2 und X3 kommandierbaren Anhängerfunktionen zugeordnet ist. Die Ausführung der Eingabeelemente als reine Taster ist besonders einfach und kostengünstig und insbesondere für die vom Fahrzeug losgelöste Aufbewahrung des Bedienmoduls in Bekleidungstaschen oder dergleichen von besonderem Vorteil. Für umschaltbare Funktionen, wie beispielsweise die beschriebenen Funktionen des zwangsweisen Anhebens oder Absenkens einer Liftachse, des Absenkens und Anhebens eines Chassis, des Anlegens oder Lösens einer Fertigerbremse können zu jeder Funktion und jeder Anweisung getrennte Tastfelder vorliegen, also insbesondere wenigstens zwei Tasten je Funktion. In besonders vorteilhafter Weise ist lediglich ein Tastelement zu jeder Funktion vorgesehen, und die durch Betätigen des Tastelements zu einer Funktion ausgelöste Wirkung kann über die Programmierung der weiteren Steuereinrichtung bestimmt werden.

Das Bedienmodul enthält ferner zu jeder kommandierbaren Funktion Anzeigeelemente, welche vorzugsweise als Leuchtdioden ausgeführt sind. Vorteilhafterweise sind zu jeder Funktion zwei Anzeigeelemente vorgesehen, welche beispielsweise durch unterschiedliche Form, Farbe oder Anordnung für den Benutzer unterscheidbar gemacht sind. Insbesondere vorteilhaft ist die Kombination mehrerer solcher Unterscheidungskriterien. Die Anzeigeelemente zu den verschiedenen Funktionen sind jeweils den zugehörigen Eingabeelementen räumlich zugeordnet.

Im skizzierten bevorzugten Beispiel sind drei Eingabeelement X1, X2, X3 in einer Reihe angeordnet und zugeordnete Anzeigeelemente sind paarweise quer zur Reihenrichtung der Eingabeelemente in direkter Nachbarschaft zu diesen angeordnet. Bei horizontaler Reihenanordnung der Eingabeelemente sind beispielsweise dem Eingabeelement X1 zwei Anzeigeelemente AZ11, AZ12 zugeordnet und unmittelbar oberhalb des Anzeigeelements X1 angeordnet. In entsprechender Weise sind Anzeigeelement AZ21, AZ22 zu dem Eingabeelement X2 und Anzeigeelemente AZ31, AZ32 zu dem Anzeigeelement X3 vorgesehen und angeordnet. Die Anzeigeelemente AZ12, AZ22 und AZ32 sind als Dreiecksymbole mit nach unten weisender Spitze, die Anzeigesymbole AZ11, AZ21 und AZ31 als Dreiecksymbole mit nach oben weisender Spitze ausgebildet. Vorteilhafterweise weisen die Anzeigeelemente AZ11, AZ21 und AZ31 eine untereinander gleiche, von den Anzeigeelemente AZ12, AZ22 und AZ32 verschiedene Leuchtfarbe auf.

Das Bedienmodul kann ein programmierbares Controllermodul PRB enthalten, welches zum einen die Eingabesignale über die Eingabeelemente X1, X2, X3 erkennt und zum anderen die Anzeigeelement steuert sowie die Kommunikation mit dem Steuermodul im Anhänger über die Funkverbindung FV oder gegebenenfalls eine Datenbusverbindung abwickelt. In vorteilhafter Ausführung kann vorgesehen sein, dass bei einer ersten Betätigung eines Eingabeelements, beispielsweise des Eingabeelements X1 für die Funktion der Liftachse, die zugeordneten Anzeigeelemente AZ11, AZ12 den aktuellen Betriebszustand der Liftachse anzeigen, indem beispielsweise bei aktuell angehobener Liftachse das obere Anzeigeelement AZ11, bei abgesenkter Liftachse das untere Anzeigeelement AZ12 leuchtet. Der aktuelle Status der jeweiligen Funktion wird vorteilhafterweise erst bei erster Betätigung des Eingabeelements über die Funkverbindung FV vom Steuermodul SM, in welchem der aktuelle Zustand aus dem Signal am Eingang EP1 nach Fig. 3 entnehmbar ist, abgefragt wird. Während eines auf die erste Betätigung des Eingabeelements X1 bzw. das Vorliegen des aktuellen Zustandssignals zu der Funktion folgenden, zeitlich begrenzten Wiederholungsintervalls von beispielsweise einer Dauer zwischen 3 und 10 Sekunden kann der Benutzer durch erneute Betätigung des Eingabeelements X1 eine Änderung des angezeigten Status der zugeordneten Funktion anweisen oder, wenn der angezeigte Status der Funktion der von ihm angestrebten Einstellung entspricht, diese durch Unterlassen einer erneuten Betätigung des Eingabeelements beibehalten.

Die Anzeigeelemente können auch fortwährend den aktuellen Status der jeweiligen Anhängerfunktion bzw. des zugehörigen Aktuators anzeigen. Das Betätigungsintervall kann dann vorteilhafterweise durch ein Zusatzsignal, beispielsweise blinkende Anzeige oder ein begleitendes akustisches Signal hervorgehoben werden. Nach Ablauf des Betätigungsintervalls fällt die Steuerung der Eingabeelemente und der Anzeigeelemente wieder in den Ausgangszustand zurück und eine erneute Betätigung des Eingabeelements X1 gilt wieder als erste Betätigung in dem vorgenannten Sinne.

Die beschriebene bevorzugte Ausführungsform eines Bedienmoduls zeichnet sich durch einen besonders einfachen und kostengünstigen Aufbau aus, was auch hinsichtlich von Folgekosten durch Ersetzen von verloren gehenden oder beschädigten Bedienmodulen günstig ist.

Um zu vermeiden, dass ein Bedienmodul bei einem nicht zugehörigen Anhänger eine Funktion auslöst, können Bedienmodul und zugehöriges anhängerseitiges Steuermodul in an sich bekannter Weise individuell aufeinander abgestimmt sein und die Kommunikation zwischen paarweise zugeordnetem Bedienmodul und Steuermodul individuell codiert sein. Eine Abstimmung eines Bedienmoduls auf ein bestimmtes Steuermodul kann beispielsweise durch Austausch individueller Daten an einem besonderen Anschluss auf Anhängerseite erfolgen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeuganhänger mit einer Bremssteuereinrichtung (EBS), einem über die Bremssteuereinrichtung betätigbaren Bremssystem, einer Sensoranordnung (SA) zur Abgabe von Sensorsignalen an die Bremssteuereinrichtung und Signalübertragungseinrichtungen (BD, CB) zur Signalübertragung zwischen der Bremssteuereinrichtung und einem Zugfahrzeug sowie mit einer Aktuatoreinrichtung (AE), **dadurch gekennzeichnet, dass** eine weitere Steuereinrichtung (WSE) mit durch einen Benutzer betätigbaren Eingabeeinrichtungen (X1, X2; X3) vorhanden ist, wobei die Aktuatoreinrichtung wenigstens einen von der weiteren Steuereinrichtung und über die Bremssteuereinrichtung, nicht aber durch die Bremssteuereinrichtung in Alleinstellung elektrisch ansteuerbaren Aktuator enthält, dass die weitere Steuereinrichtung ein anhängerseitig fest installiertes Steuermodul (SM) mit einem von diesem getrennten Bedienmodul (BM) enthält, und dass wenigstens ein Signalpfad (AP, EB; AB, EM) zur Signalübertragung zwischen der weiteren Steuereinrichtung und der Bremssteuereinrichtung vorgesehen ist.

2. Fahrzeuganhänger nach Anspruch 1, **dadurch gekennzeichnet, dass** die weitere Steuereinrichtung durch die Bremssteuereinrichtung, insbesondere über einen programmierbaren Steuerausgang (VW) mit elektrischer Leistung versorgt ist.

3. Fahrzeuganhänger nach Anspruch 1 oder 2, **dadurch gekennzeichnet, dass** die weitere Steuereinrichtung (WSE) elektronisch programmierbar ist.

4. Fahrzeuganhänger nach einem der Ansprüche 1 bis 3, **dadurch gekennzeichnet, dass** die weitere Steuereinrichtung ein anhängerseitiges Steuermodul (SM) und das von diesem beabstandet im Zugfahrzeug anordenbare Bedienmodul (BM) enthält, und dass zwischen Bedienmodul (BM) und Steuermodul (SM) Signale übertragbar sind.

5. Fahrzeuganhängernach Anspruch 4, **dadurch gekennzeichnet, dass** das Signal zwischen Bedienmodul (BM) und Steuermodul (SM) über die Signal-übertragungseinrichtung (DB) zwischen Zugfahrzeug und Bremssteuereinrichtung übertragbar sind.

6. Fahrzeuganhänger nach Anspruch 4 oder 5, **dadurch gekennzeichnet, dass** das Signal zwischen Bedienmodul (BM) und Steuermodul (SM) über eine Funkverbindung (FV) übertragbar sind.

7. Fahrzeuganhänger nach Anspruch 6, **dadurch gekennzeichnet, dass** das Bedienmodul (BM) unabhängig vom Zugfahrzeug handhabbar ist.

8. Fahrzeuganhänger nach einem der Ansprüche 2 bis 7, **dadurch gekennzeichnet, dass** der wenigstens eine Signalpfad zwischen der Bremssteuereinrichtung (EBS) und dem Steuermodul (SM) ohne Zwischenschaltung des Bedienmoduls verläuft.

9. Fahrzeuganhänger nach einem der Ansprüche 1 bis 8, **dadurch gekennzeichnet, dass** die Bremssteuereinrichtung (EBS) zur Abgabe wenigstens eines Betriebszustandssignals an die weitere Steuereinrichtung (WSE) eingerichtet ist.

10. Fahrzeuganhänger nach Anspruch 9, **dadurch gekennzeichnet, dass** ein Betriebszustandssignal ein von der Sensoranordnung (SA) an die Bremssteuereinrichtung (EBS) abgegebenes Sensorsignal oder ein aus einem oder mehreren Sensorsignalen abgeleitetes Signal ist.

11. Fahrzeuganhänger nach Anspruch 9 oder 10, **dadurch gekennzeichnet, dass** ein Betriebszustandssignal ein von der Fahrzeuggeschwindigkeit abhängiges Signal ist.

12. Fahrzeuganhänger nach einem der Ansprüche 9 bis 11, **dadurch gekennzeichnet, dass** ein Betriebszustandssignal ein binäres Schwellwertsignal bezüglich einer von der Bremssteuereinrichtung erfassbaren Betriebszustandsgröße ist

13. Fahrzeuganhänger nach einem der Ansprüche 1 bis 12, **dadurch gekennzeichnet, dass** die weitere Steuereinrichtung (WSE) zur Abgabe eines Betätigungssignals an die Bremssteuereinrichtung (EBS) eingerichtet ist.

14. Fahrzeuganhänger nach Anspruch 13, **dadurch gekennzeichnet, dass** ein Betätigungssignal ein Steuersignal zur Betätigung des Bremssystems ist.

15. Fahrzeuganhänger nach Anspruch 14, **dadurch gekennzeichnet, dass** ein Betätigungssignal ein Signal zur Betätigung einer Achsliftvorrichtung (LA) ist.

16. Fahrzeuganhänger nach einem der Ansprüche 1 bis 15, **dadurch gekennzeichnet, dass** die weitere Steuereinrichtung (WSE) ein Ansteuersignal an die Aktuatoreinrichtung (AE) nach Maßgabe einer Benutzereingabe in die Bedieneinrichtung abgibt.

17. Fahrzeuganhänger nach Anspruch 16, **dadurch gekennzeichnet, dass** die Steuereinrichtung (WSE) für die Abgabe eines Ansteuersignals die Benutzereingabe mit einem von der Bremssteuereinrichtung (EBS) empfangenen Betriebszustandssignal verknüpft.

18. Fahrzeuganhänger nach einem der Ansprüche 1 bis 17, **dadurch gekennzeichnet, dass** die Aktuatoreinrichtung (AE) ein elektrisch ansteuerbares Fluidventil (FB) enthält.

19. Fahrzeuganhänger nach Anspruch 18, **dadurch gekennzeichnet, dass** ein Fluideingang des Fluidventils mit einer Fluidquelle verbunden ist, welche auch einen Fluideingang der Bremssteuereinrichtung mit einem Arbeitsfluid, insbesondere Druckluft beaufschlagt.

20. Fahrzeuganhänger nach Anspruch 19, **dadurch gekennzeichnet, dass** ein Fluideingang des Fluidventils mit einem steuerbaren Fluidausgang der Bremssteuereinrichtung verbunden ist.

21. Fahrzeuganhänger nach einem der Ansprüche 1 bis 20, **dadurch gekennzeichnet, dass** dem Benutzer der weiteren Steuereinrichtung akustisch und/oder optisch der Zustand der Aktuatoreinrichtung, insbesondere die Ausführung einer gegebenen Betätigungsanweisung anzeigbar ist.

## Claims

1. Vehicle trailer comprising a brake control system (EBS), a brake system which can be actuated by means of the brake control system, a sensor arrangement (SA) for outputting sensor signals to the brake control system, and signal transmission devices (BD, CB) for transmitting signals between the brake control system and a traction vehicle as well as having an actuator device (AE), **characterized in that** a further control system (WSE) with input devices (X1, X2', X3) which can be actuated by a user is present, wherein the actuator system contains at least one actuator which can be actuated electrically by the further control device and by means of the brake control system, but not by the brake control system alone, **in that** the further control system contains a control module (SM) which is permanently installed on the trailer side and has an operator control module (BM) which is separate therefrom, and **in that** at least one signal path (AP, EB; AB, EM) for transmitting signals between the further control system and the brake control system is provided.

2. Vehicle trailer according to Claim 1, **characterized in that** the further control system is supplied with electrical power by the brake control system, in particular via a programmable control output (VW).

3. Vehicle trailer according to Claim 1 or 2, **characterized in that** the further control system (WSE) can be programmed electronically.

4. Vehicle trailer according to one of Claims 1 to 3, **characterized in that** the further control system contains a trailer-side control module (SM) and the operator control module (BM) which can be arranged at a distance therefrom in the traction vehicle, and **in that** signals can be transmitted between the operator control module (BM) and the control module (SM).

5. Vehicle trailer according to Claim 4, **characterized in that** the signal between the operator control module (BM) and the control module (SM) can be transmitted between the traction vehicle and the brake control system by means of the signal transmission device (DB).

6. Vehicle trailer according to Claim 4 or 5, **characterized in that** the signal between the operator control module (BM) and the control module (SM) can be transmitted via a radio link (FV).

7. Vehicle trailer according to Claim 6, **characterized in that** the operator control module (BM) can be operated independently of the traction vehicle.

8. Vehicle trailer according to one of Claims 2 to 7, **characterized in that** the at least one signal path runs between the brake control system (EBS) and the control module (SM) without intermediate connection of the operator control module.

9. Vehicle trailer according to one of Claims 1 to 8, **characterized in that** the brake control system (EBS) is configured to output at least one operating state signal to the further control system (WSE).

10. Vehicle trailer according to Claim 9, **characterized in that** an operating state signal is a sensor signal which is output to the brake control system (EBS) by the sensor arrangement (SA) or a signal which is derived from one or more sensor signals.

11. Vehicle trailer according to Claim 9 or 10, **characterized in that** an operating state signal is a signal which is dependent on the vehicle speed.

12. Vehicle trailer according to one of Claims 9 to 11, **characterized in that** an operating state signal is a binary threshold value signal relating to an operating state variable which can be detected by the brake control system.

13. Vehicle trailer according to one of Claims 1 to 12, **characterized in that** the further control system (WSE) is configured to output an activation signal to the brake control system (EBS).

14. Vehicle trailer according to Claim 13, **characterized in that** an activation signal is a control signal for activating the brake system.

15. Vehicle trailer according to Claim 14, **characterized in that** an activation signal is a signal for activating an axle lifting device (LA).

16. Vehicle trailer according to one of Claims 1 to 15, **characterized in that** the further control system (WSE) outputs an actuation signal to the actuator device (AE) in accordance with a user input into the operator control device.

17. Vehicle trailer according to Claim 16, **characterized in that** for the outputting of an actuation signal the control system (WSE) logically links the user input with an operating state signal which is received by the brake control system (EBS).

18. Vehicle trailer according to one of Claims 1 to 17, **characterized in that** the actuator device (AE) contains and electrically actuable fluid valve (FB).

19. Vehicle trailer according to Claim 18, **characterized in that** a fluid inlet of the fluid valve is connected to a fluid source which also applies a working fluid, in particular compressed air, to a fluid inlet of the brake control system.

20. Vehicle trailer according to Claim 19, **characterized in that** a fluid inlet of the fluid valve is connected to a controllable fluid outlet of the brake control system.

21. Vehicle trailer according to one of Claims 1 to 20, **characterized in that** the state of the actuator device, in particular the execution of a given activation instruction, can be indicated acoustically and/or displayed visually to the user of the further control system.

## Revendications

1. Remorque de véhicule comprenant un dispositif de commande de freinage (EBS), un système de freinage pouvant être actionné par le biais du dispositif de commande de freinage, un arrangement de détection (SA) destiné à délivrer des signaux de capteur au dispositif de commande de freinage et des dispositifs de transmission de signal (BD, CB) destinés à la transmission du signal entre le dispositif de commande de freinage et un véhicule tracteur ainsi qu'un dispositif actionneur (AE), **caractérisée en ce qu'**il existe un dispositif de commande supplémentaire (WSE) muni de dispositifs d'entrée (X1, X2, X3) pouvant être actionnés par un utilisateur, le dispositif d'actionneur contenant au moins un actionneur qui peut être commandé électriquement par le dispositif de commande supplémentaire et par le biais du dispositif de commande de freinage, mais par uniquement par le dispositif de commande de freinage, **en ce que** le dispositif de commande supplémentaire contient un module de commande (SM) installé à demeure du côté de la remorque avec un module de conduite (BM) séparé de celui-ci, et **en ce qu'**au moins un trajet de signal (AP, EB ; AB, EM) destiné à la transmission de signal est prévu entre le dispositif de commande supplémentaire et le dispositif de commande de freinage.

2. Remorque de véhicule selon la revendication 1, **caractérisée en ce que** le dispositif de commande supplémentaire est alimenté en puissance électrique par le dispositif de commande de freinage, notamment par le biais d'une sortie de commande (VW) programmable.

3. Remorque de véhicule selon la revendication 1 ou 2, **caractérisée en ce que** le dispositif de commande supplémentaire (WSE) est programmable électroniquement.

4. Remorque de véhicule selon l'une des revendications 1 à 3, **caractérisée en ce que** le dispositif de commande supplémentaire contient un module de commande (SM) côté remorque ainsi que le module de conduite (BM) distant de celui-ci qui peut être disposé dans le véhicule tracteur, et **en ce que** des signaux peuvent être transmis entre le module de conduite (BM) et le module de commande (SM).

5. Remorque de véhicule selon la revendication 4, **caractérisée en ce que** les signaux entre le module de conduite (BM) et le module de commande (SM) peuvent être transmis par le biais du dispositif de transmission de signal (DB) entre le véhicule tracteur et le dispositif de commande de freinage.

6. Remorque de véhicule selon la revendication 4 ou 5, **caractérisée en ce que** les signaux entre le module de conduite (BM) et le module de commande (SM) peuvent être transmis par le biais d'une liaison radioélectrique (FV).

7. Remorque de véhicule selon la revendication 6, **caractérisée en ce que** le module de conduite (BM) peut être manipulé indépendamment du véhicule tracteur.

8. Remorque de véhicule selon l'une des revendications 2 à 7, **caractérisée en ce que** l'au moins un trajet de signal s'étend entre le dispositif de commande de freinage (EBS) et le module de commande (SM) sans interconnexion du module de conduite.

9. Remorque de véhicule selon l'une des revendications 1 à 8, **caractérisée en ce que** le dispositif de commande de freinage (EBS) est conçu pour délivrer au moins un signal d'état opérationnel au dispositif de commande supplémentaire (WSE).

10. Remorque de véhicule selon la revendication 9, **caractérisée en ce qu'**un signal d'état opérationnel est un signal de capteur délivré au dispositif de commande de freinage (EBS) par l'arrangement de détection (SA) ou un signal dérivé d'un ou de plusieurs signaux de capteur.

11. Remorque de véhicule selon la revendication 9 ou 10, **caractérisée en ce qu'**un signal d'état opérationnel est un signal dépendant de la vitesse du véhicule.

12. Remorque de véhicule selon l'une des revendications 9 à 11, **caractérisée en ce qu'**un signal d'état opérationnel est un signal de seuil binaire concernant une grandeur d'état opérationnel pouvant être détectée par le dispositif de commande de freinage.

13. Remorque de véhicule selon l'une des revendications 1 à 12, **caractérisée en ce que** le dispositif de commande supplémentaire (WSE) est conçu pour délivrer un signal d'actionnement au dispositif de commande de freinage (EBS).

14. Remorque de véhicule selon la revendication 13, **caractérisée en ce qu'**un signal d'actionnement est un signal destiné à actionner le système de freinage.

15. Remorque de véhicule selon la revendication 14, **caractérisée en ce qu'**un signal d'actionnement est un signal destiné à actionner un équipement de levage d'essieu (LA).

16. Remorque de véhicule selon l'une des revendications 1 à 15, **caractérisée en ce que** le dispositif de commande supplémentaire (WSE) délivre un signal de pilotage au dispositif actionneur (AE) d'après les indications d'une entrée d'utilisateur dans le dispositif de conduite.

17. Remorque de véhicule selon la revendication 16, **caractérisée en ce que** pour délivrer un signal de pilotage, le dispositif de commande supplémentaire (WSE) combine l'entrée d'utilisateur avec un signal d'état opérationnel reçu par le dispositif de commande de freinage (EBS).

18. Remorque de véhicule selon l'une des revendications 1 à 17, **caractérisée en ce que** le dispositif actionneur (AE) contient une vanne à fluide (FB) pouvant être pilotée électriquement.

19. Remorque de véhicule selon la revendication 18, **caractérisée en ce qu'**une entrée de fluide de la vanne à fluide est reliée à une source de fluide qui alimente également une entrée de fluide du dispositif de commande de freinage avec un fluide de travail, notamment de l'air comprimé.

20. Remorque de véhicule selon la revendication 19, **caractérisée en ce qu'**une entrée de fluide de la vanne à fluide est reliée à une sortie de fluide commandable du dispositif de commande de freinage.

21. Remorque de véhicule selon l'une des revendications 1 à 20, **caractérisée en ce que** l'état du dispositif actionneur peut être indiqué de manière sonore et/ou visuelle à l'utilisateur du dispositif de commande supplémentaire, notamment l'exécution d'une instruction d'actionnement donnée.
